**Europäisches Patentamt**

**European Patent Office**

**Office européen des brevets**

(19)

(11) Veröffentlichungsnummer: **0 133 152**
**B1**

# (12) EUROPÄISCHE PATENTSCHRIFT

(45) Veröffentlichungstag der Patentschrift:
02.09.87

(51) Int. Cl.⁴: **H 02 B 1/08,** H 02 B 11/00

(21) Anmeldenummer: **84730058.9**

(22) Anmeldetag: **30.05.84**

(54) **Anordnung zum Anschluss von Hilfsleitungen an ein Schaltgerät oder eine Schaltgerätekombination.**

(30) Priorität: **10.06.83 DE 3321497**

(43) Veröffentlichungstag der Anmeldung:
**13.02.85 Patentblatt 85/7**

(45) Bekanntmachung des Hinweises auf die Patenterteilung:
**02.09.87 Patentblatt 87/36**

(84) Benannte Vertragsstaaten:
**AT BE CH DE FR GB IT LI LU NL SE**

(56) Entgegenhaltungen:
**FR-A-2 498 380**
**US-A-2 740 944**
**US-A-4 020 301**

(73) Patentinhaber: **Siemens Aktiengesellschaft Berlin und München, Wittelsbacherplatz 2, D-8000 München 2 (DE)**

(72) Erfinder: **Prietzel, Günter, Ing.- grad., Beerwinkel 39a, D-1000 Berlin 20 (DE)**
Erfinder: **Witibschlager, Friedrich, Ing.- grad., Gebbertstrasse 138, D-8520 Erlangen (DE)**

EP 0 133 152 B1

## Beschreibung

Die Erfindung betrifft eine Anordnung zum Anschluß von Hilfsleitungen an ein Schaltgerät bzw. eine Schaltgerätekombination mit einer am Schaltgerät bzw. - kombination angebrachten Klemmleiste, die eine Gruppe von Kontaktgliedern für mit dem Schaltgerät bzw. - kombination verbundene Hilfsleitungen und eine Gruppe mit gleicher Anzahl von Kontaktgliedern für von dem Schaltgerät bzw. - kombination wegführende Hilfsleitungen besitzt, sowie mit einem das Schaltgerät bzw. - kombination aufnehmenden Träger, z. B. gemäss der US-A-4 020 301.

Es handelt sich hierbei um eine allgemein übliche Anordnung, wie sie beispielsweise in Niederspannungsschaltanlagen oder Mittelspannungsschaltanlagen anzutreffen und beispielsweise der US-A-4 020 301 zu entnehmen ist. Die Schaltgeräte können dabei Leistungsschalter oder Schütze sein, während unter einer Schaltgerätekombination im vorliegenden Zusammenhang eine Zusammenfassung von Geräten zu verstehen ist, wie sie für den Betrieb motorischer Antriebe benötigt werden, d. h. Schütze, Schmelzsicherungen, Schutzgeräte sowie Befehlsgeräte. Der erwähnte Träger kann sowohl ein offenes Gestell oder ein Gerüst sein, an dem ein oder mehrere Schaltgeräte oder Schaltgerätekombinationen befestigt sind, oder es kann sich um einen Schaltschrank handeln, in den die Schaltgeräte oder Schaltgerätekombinationen gegen Berührung und/oder Einflüsse der Umgebung geschützt eingesetzt sind. Ferner kann das Schaltgerät oder die Schaltgerätekombination fest montiert oder ausziebar angeordnet sein. Bei ausziehbarer Anordnung verfügt das Schaltgerät oder die Schaltgerätekombination über Trennkontakte für die Hauptstrombahnen, die beim Einfahren des Gerätes oder der Gerätekombination mit ortsfesten Kontaktgliedern in Eingriff gelangen und von diesen beim Ausfahren getrennt werden.

Die für die Hilfsleitungen benötigte Klemmleiste ist üblicherweise je nach der Einbauart des Schaltgerätes oder der Schaltgerätekombination unterschiedlich ausgebildet. Beispielsweise ist es bei festem Einbau eines Schaltgerätes üblich, eine normale Klemmleiste mit Schraubklemmen oder schraubenlosem Anschluß zu wählen, wobei jeweils eine Klemmstelle für eine schalterseitige Hilfsleitung und für eine wegführende Hilfsleitung vorgesehen ist. Soll das Schaltgerät dagegen ausfahrbar an seinem Träger angeordnet sein, so ist es üblich, anstelle einer Klemmleiste einen Stecksockel vorzusehen, auf den ein Vielfachstecker für sämtliche wegführenden Hilfsleitungen aufsteckbar ist.

Darüber hinaus sind Anordnungen bekanntgeworden, bei der eine schalterseitige Klemmleiste mit einem ortsfesten Gegenstück nach Art von Gleitkontaktbahnen zusammenwirkt (US-A-4 020 301 und US-A-3 663 773). Hierbei bleiben die Hilfsleitungen bei der Verschiebung des Schaltgerätes aus der Betriebsstellung in die Teststellung verbunden und werden erst getrennt, wenn das Schaltgerät noch weiter in die Trennstellung bewegt wird.

Ausgehend davon, daß bisher eine Vielzahl unterschiedlicher Teile benötigt wird, um ein Schaltgerät oder eine Schaltgerätekombination mit wegführenden Hilfsleitungen zu verbinden, je nachdem, in welcher Einbauart das Schaltgerät benutzt werden soll und welche Anforderungen an die Handhabung gestellt werden, liegt der Erfindung die Aufgabe zugrunde, ein System einheitlicher Teile zu schaffen, die für die Hilfsleitungen bei allen Einbauarten des Schaltgerätes oder der Schaltgerätekombination verwendbar sind. Insbesondere soll die geräteseitige Klemmleiste als Basiselement eines solchen Systems ausgebildet werden.

Diese Aufgabe wird bei einer Anordnung der eingangs genannten Art durch folgende Merkmale gelöst:

a) die Klemmleiste besitzt für jede mit dem Schaltgerät verbundene Hilfsleitung mindestens zwei weitere Kontaktglieder für von dem Schaltgerät wegführende Hilfsleitungen;

b) mindestens eine Gruppe von Kontaktgliedern für wegführende Hilfsleitungen ist an der Klemmleiste so angeordnet, daß die Kontaktglieder von der Frontseite des Schaltgerätes her zugänglich sind, während mindestens eine Gruppe von Kontaktgliedern an der Rückseite der Klemmleiste angeordnet ist;

c) die Kontaktglieder der einen an der Frontseite der Klemmleiste befindlichen Gruppe sind als Anschlußvorrichtungen für Einzelleiter und die Kontaktglieder einer weiteren Gruppe sind als Aufnahmevorrichtungen für Stifte eines Vielfachsteckers ausgebildet;

d) die Kontaktglieder einer an der Rückseite der Klemmleiste befindlichen Gruppe von Kontaktgliedern sind zum Eingreifen eines an der Klemmleiste und/oder an dem Schaltgerät dauerhaft oder lösbar anzubringenden Steckelementes ausgebildet, wobei das Steckelement bei ausfahrbarer Anordnung des Schaltgerätes im Zuge einer wegführenden Hilfsleitung als Zwischenglied bezüglich eines ortsfesten Stützpunktes dient.

Das Steckelement ist hierbei ein Zusatzteil, das an die Grundausführung eines Schaltgerätes angefügt wird, um dieses für die ausfahrbare Anordnung vorzubereiten, bei der eine selbsttätige Trennung der Hilfsleitungen erwünscht ist, wenn das Schaltgerät über die Teststellung hinaus bewegt wird.

Es sind zwar bereits Klemmleisten und hiermit zusammenwirkende Stecker bekannt geworden (US-A-2 740 944), die zur Verbindung einer ausziehbaren Geräteeinheit mit einem ortsfesten Gestell dienen und die sowohl an der Frontseite als auch an der Rückseite zugängliche Kontaktglieder aufweisen. Diese Anordnung dient jedoch nicht zum Anschluß von Hilfsleitungen, sondern hat die Aufgabe, alle überhaupt benötigten elektrischen Verbindungen herzustellen. Daher sind die Klemmleiste und der zugehörige Stecksockel stets nur gemeinsam verwendbar, während die Klemmleiste nach der Erfindung so ausgebildet ist, daß sie sowohl selbständig verwendbar ist, als auch in Verbindung mit einem Steckelement, das es ermöglicht, die Kontaktgabe zwischen dem ausziehbaren Gerät und ortsfesten Leistungen über einen gewissen Weg des Gerätes aufrecht zu erhalten.

In diesem Zusammenhang wird durch die rückseitige Lage des Steckelementes eine Anordnung geschaffen, bei der sich die Klemmleiste nahe der Frontseite des Schaltgerätes befindet, wo sie auch im eingebauten Zustand des Schaltgerätes gut zugänglich ist, beispielsweise zu Prüfzwecken oder zum Anbringen oder Lösen eines Vielfachsteckers. Der in der Tiefenerstreckung des Schaltgerätes gesehen hinter der Klemmleiste liegende Raum wird durch das Steckelement und den Stützpunkt der wegführenden Hilfsleitungen in der jeweiligen Ausführung ausgenutzt. Kontaktbahnen waren bisher nur anwendbar, wenn die Schaltgeräte bereits fabrikseitig damit ausgerüstet waren.

In einer Weiterbildung der Erfindung kann der Stützpunkt als Kontaktblock ausgebildet sein, der jeweils ein Kontaktglied für eine wegführende Hilfsleitung und ein mit diesem galvanisch verbundenes weiteres Kontaktglied aufweist, das zusammen mit einem an dem Steckelement angebrachten korrespondierenden Kontaktglied entlang einem zwischen der Betriebsstellung und der Teststellung des Schaltgerätes zurückzuliegenden Weg nach Art einer Gleitkontaktbahn zusammenwirkt. Solche Gleitkontaktbahnen waren bisher nur anwendbar, wenn die Schaltgeräte bereits fabrikseitig damit ausgerüstet waren.

Demgegenüber wird bei der erwähnten Weiterbildung der Erfindung von der als Basiselement ausgebildeten einheitlichen Klemmleiste ausgegangen. An diese wird das Steckelement angefügt, das nun mit einem trägerseitig angebrachten Kontaktblock in leitende Verbindung tritt. Beim Ausfahren des Schaltgerätes gelangt dieses zunächst in die Teststellung, in der nur die Hauptstrombahnen unterbrochen sind, während alle Hilfsleitungen durchgeschaltet bleiben. Die Weiterbewegung des Schaltgerätes in die Trennstellung oder die vollständige Abnahme des Schaltgerätes von seinem Träger erfordert keine Handhabung der Hilfsleitungen, weil die Kontaktglieder des Steckelementes und des Kontaktblockes selbsttätig außer Eingriff gelangen und beim Einsetzes des Schaltgerätes in seinen Träger wieder in Verbindung miteinander treten. Bei dieser Anordnung empfiehlt sich eine derartige Gestaltung, daß der Kontaktblock und/oder seine Kontaktglieder sowie das Steckelement und/oder seine Kontaktglieder für den Ausgleich von Lagetoleranzen bemessen bzw. mit einer Vorrichtung zum Ausgleich solcher Toleranzen versehen sind. Ist die Anordnung in dieser Weise ausgebildet, so sind besondere Vorkehrungen beim Einschieben des Schaltgerätes in seinen Träger hinsichtlich der Hilfsleitungen entbehrlich, weil trotz der unvermeidlichen Toleranzen ein einwandfreies Zusammenwirken der Kontakglieder gewährleistet ist.

Während bei der soeben beschriebenen Anordnung, die für ausfahrbare Schaltgeräte vorgesehen ist, Gleitkontaktanordnungen für die Hilfsleitungen vorgesehen sind, können auch biegsame Hilfsleitungen mit selbsttätiger Trennung beim Herausziehen des Schaltgerätes eingesetzt werden, um beispielsweise eine besonders hohe Kontaktsicherheit im Zuge der Hilfsleitungen zu erzielen. Dies kann dadurch geschehen, daß das bereits erwähnte Steckelement an ortsfesten Führungsteilen in Richtung der Trennstellung des Schaltgerätes bis zu einem Anschlag gegen Federkraft bewegbar geführt ist und Kontaktglieder für den Anschluß biegsamer und beweglicher Hilfsleitungen besitzt, die an dem ortsfesten Stützpunkt gehalten sind.

Um den seitlich der Schaltgeräte für die Hilfsleitungen freizuhaltenden Raum knapp bemessen zu können, empfiehlt es sich, das Steckelement an die Klemmleiste hinsichtlich der Polzahl und der Abmessungen des Profils anzupassen. Es kann dann für den festen Einbau und die ausfahrbare Anordnung der Schaltgeräte der gleiche Raumbedarf hinsichtlich des Anschlusses der Hilfsleitungen zugrunde gelegt werden.

Insbesondere beim Vorhandensein einer großen Anzahl von Hilfsleitungen kann es erwünscht oder erforderlich sein, eine Möglichkeit dafür vorzusehen, daß man sich auf einfache Weise vom richtigen Anschluß der Hilfsleitungen, vom Vorhandensein bestimmter Signale oder der Güte des Leitungsweges vergewissern kann. Hierzu empfiehlt es sich, an der Klemmleiste, einem in diese einzuführenden Stecker und an dem Kontaktblock oder einzelnen dieser Teile zusätzliche Kontaktglieder für Prüfzwecke vorzusehen. Es ist zweckmäßig, diese Kontaktglieder in solcher Beschaffenheit und Lage an den genannten Teilen anzubringen, daß sich eine übliche Prüfspitze ohne Schwierigkeit aufsetzen bzw. einführen läßt.

Die Erfindung wird im folgenden anhand der in den Figuren dargestellten Ausführungsbeispiele näher erläutert.

Die Figur 1 zeigt schematisch einen Niederspannungsleistungsschalter von vorn in einer teilweise dargestellten Schaltanlage.

Die Figur 2 zeigt in vereinfachter Darstellung eine an einem Leistungsschalter seitlich angebrachte Klemmleiste.

In der Figur 3 ist die Klemmleiste gemäß der Figur 2 zusammen mit einem Vielfachstecker dargestellt.

Die figur 4 zeigt eine insbesondere zur Verwendung mit dem Vielfachstecker gemäß der Figur 3 geeignete Ausführung einer Klemmleiste.

In der Figur 5 ist eine dreiteilige Anordnung dargestellt, die neben der Klemmleiste ein Steckelement und einen ortsfesten Kontaktblock umfaßt und die insbesondere für die ausziehbare Anordnung von Schaltgeräten vorgesehen ist.

Die Figur 6 zeigt eine schwimmende Anordnung des Kontaktblockes nach der Figur 5 für den Toleranzausgleich.

In der Figur 7 ist perspektivisch eine andere Ausführungsform für ausfahrbar angeordnete Schaltgeräte gezeigt, bei der zur Überbrückung des Fahrweges des Schaltgerätes, biegsame Hilfsleitungen vorgesehen sind.

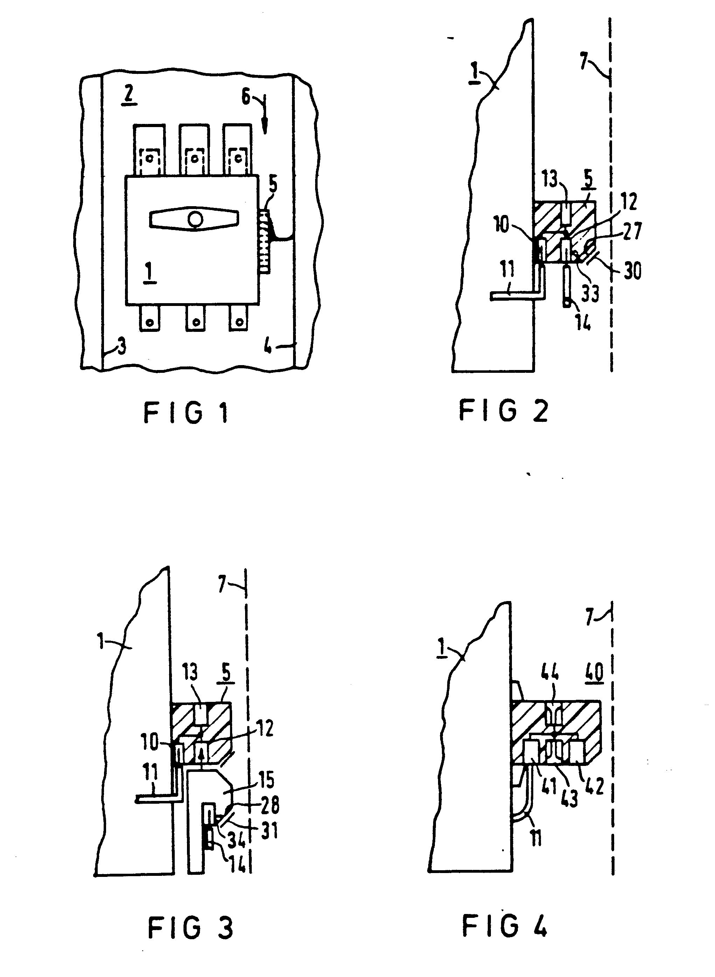

Der in der Figur 1 gezeigte Niederspannungs-Leistungsschalter 1 ist in einer abgebrochen dargestellten Schaltanlage 2 fest eingebaut. Die zur Befestigung dienenden Bauelemente sind ebenso wie zu- und abführende Stromschienen nicht gezeigt, da diese Teile für das Verständnis der Erfindung nicht benötigt werden. Es sei nur erwähnt, daß der Leistungsschalter 1 zwischen zwei Wänden 3 und 4 angeordnet ist, durch die die Schaltanlage 2 in Abschnitte oder Felder unterteilt wird. Nach vorn kann die Schaltanlage entweder offen ausgeführt sein oder es können zum Schutz der Schaltgeräte gegen Berührung sowie gegen Einflüsse der Umgebung Abdeckplatten oder Türen vorgesehen sein. An der von vorn gesehen rechten Seite des Leistungsschalters 1 ist eine Klemmleiste 5 angeordnet, die zum Anschluß von Hilfsleitungen dient. Hierunter sind diejenigen elektrischen Verbindungen zu verstehen, die zusätzlich zu den Hauptstrombahnen zwischen dem Leistungsschalter und einer Steuerwarte zur Übertragung von Melde- und Steuersignalen vorgesehen sind.

Die Figur 2 zeigt Einzelheiten der Klemmleiste 5. In dieser Figur ist die Klemmleiste von oben, d. h. in Richtung des in der Figur 1 eingetragenen Pfeiles 6 dargestellt. Der Leistungsschalter 1 ist abgebrochen dargestellt, während durch eine gestrichelte Linie 7 eine beliebige Begrenzung des Einbauraumes des Leistungsschalters 1 angedeutet ist, z. B. ein Tragwinkel oder eine Zwischenwand der Schaltanlage 2.

Die Klemmleiste 5 weist an ihrer zur Vorderseite des Leistungsschalters 1 weisenden Seite ein Kontaktglied 10 auf, in das eine schalterseitige Hilfsleitung 11 eingeführt ist. Diese kann mit einem Zusatzgerät beliebiger Art, beispielsweise mit einem Hilfsschalter oder einem Fernauslöser in Verbindung stehen. Neben dem Kontaktglied 10 und in galvanischer Verbindung hiermit befindet sich an der Vorderseite der Klemmleiste 5 ein weiteres Kontaktglied 12, während an der Rückseite der Klemmleiste 5 gleichfalls in galvanischer Verbindung mit dem Kontaktelement 10 ein drittes Kontaktelement 13 angeordnet ist. Entsprechend der Anzahl schalterseitiger Hilfsleitungen ist die Klemmleiste mit einer Vielzahl dieser Anordnungen von Kontaktgliedern

versehen. Die Ausbildung der Kontaktstellen 10, 12 und 13 ist hierbei beliebig. Beispielsweise können also die Kontaktglieder als Schraubklemmen, als Druckklemmgn oder als selbstklemmende Kontaktglieder ausgebildet sein. Es ist auch möglich, unterschiedliche Ausführungen von Kontaktgliedern miteinander zu kombinieren.

In dem Ausführungsbeispiel gemäß der Figur 2 ist angenommen, daß der Leistungsschalter 1 in der Schaltanlage fest eingebaut ist. Die einfachste Art der Verbindung der schalterseitigen Hilfsleitungen 11 mit den anlagenseitigen Hilfsleitungen besteht demzufolge darin, diese Hilfsleitungen einzeln in die entsprechenden Kontaktglieder einzuführen. Dies ist in der Figur 2 am Beispiel einer wegführenden Hilfsleitung 14 gezeigt. Das rückseitige Kontaktglied 13 der Klemmleiste 5 bleibt in diesem Fall frei.

Zur Erleichterung der Handhabung, zur Verringerung der Verwechslungsgefahr oder auch zum Anschluß einer größeren Anzahl von Hilfsleitungen an einen Leistungsschalter kann es vorteilhaft sein, einen Vielfachstecker zu verwenden, wie dies an sich bekannt ist. Hierzu ist in dem Ausführungsbeispiel gemäß der Figur 3 ein Vielfachstecker 15 gezeigt, an den alle anlagenseitigen Hilfsleitungen 14 angeschlossen sind. Der Vielfachstecker 15 besitzt seinerseits Kontaktstifte, die in die Kontaktglieder 12 der Klemmleiste 5 einführbar sind. Diese Kontaktglieder sind somit sowohl für den Einzelanschluß von Leitungen als auch für die Kontaktstifte des Vielfachsteckers 15 geeignet.

Wegen der unterschiedlichen Bedingungen beim Eingreifen von abisolierten Einzelleitern und von Kontaktsstiften in die Kontaktglieder der Klemmleiste kann es vorteilhaft sein, abweichend von dem Beispiel gemäß der Figur 3 gesonderte Kontaktglieder vorzusehen. Ein Beispiel hierfür ist in der Figur 4 gezeigt.

Die Klemmleiste 40 gemäß der Figur 4 weist dementsprechend an ihrer zur Frontseite des Leistungsschalters 1 weisenden Seite drei Kontaktglieder 41, 42 und 43 auf. Hiervon entsprechen die Kontaktglieder 41 und 42 den Kontaktgliedern 10 und 12 in Figur 1. Das Kontaktglied 43 ist speziell zum Eingriff eines Kontaktstiftes eines Vielfachsteckers bestimmt, beispielsweise des Vielfachsteckers 15 in Figur 3. An ihrer Rückseite besitzt die Klemmleiste 40 ein Kontaktglied 44, das dem Kontaktglied 23 in der Figur 2 entspricht.

Zu den Beispielen gemäß den Figuren 3 und 4 ist zu bemerken, daß ein frontseitiger Stecker (15 in Figur 3) gleichermaßen bei festem Einbau des Leistungsschalters 1 oder ausfahrbarer Anordnung geeignet ist. In beiden Fällen ist es erforderlich, den Stecker von der Klemmleiste 5 bzw. 40 abzunehmen, bevor der Leistungsschalter von seinem Träger abgenommen wird.

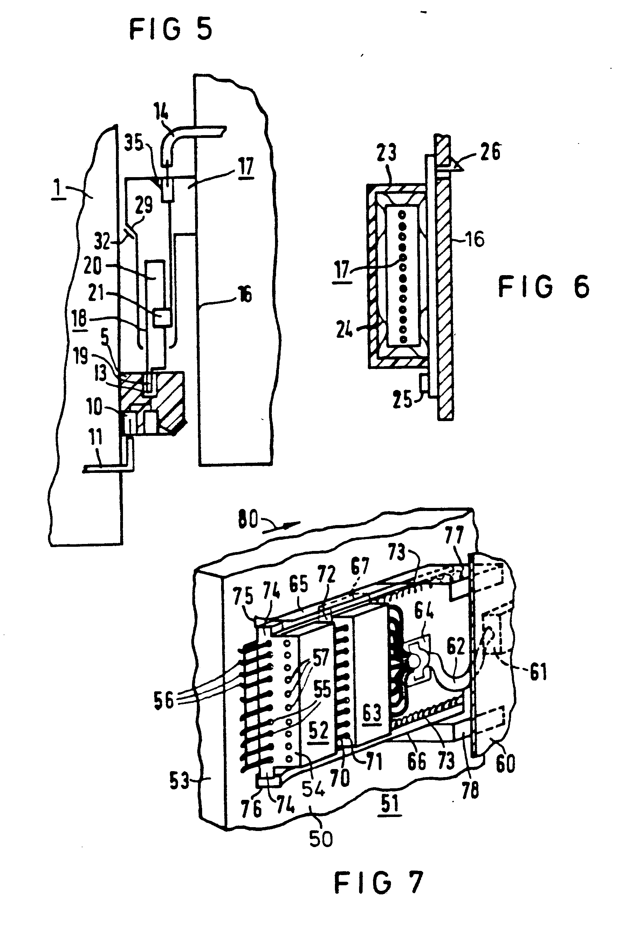

Die in der Figur 5 gezeigte Anordnung ist speziell für den Fall vorgesehen, daß der Leistungsschalter 1 innerhalb der Schaltanlage 2 in einem Einschubrahmen 16 ausfahrbar angeordnet ist. Hierzu ist wieder in unveränderter Ausführung eine Klemmleiste 5 vorgesehen, an deren Kontaktelemente 10, wie in den bisherigen Beispielen die schalterseitigen Hilfsleitungen 11 angeschlossen sind. Die anlagenseitigen Hilfsleitungen 14 sind jedoch im Unterschied zu den zuvor beschriebenen Ausführungsbeispielen an einem als Stützpunkt dienenden Kontaktblock 17 angeschlossen, der an dem Einschubrahmen 16 befestigt ist. Dieser Kontaktblock besitzt eine der Anzahl der Hilfsleitungen 14 entsprechende Anzahl von Kontaktbuchsen 21 oder ähnlichen Bauelementen, die eine solche Länge besitzen, daß über den von der Betriebsstellung bis zur Teststellung des Leistungsschalters 1 zurückzulegenden Weg eine Verbindung der Hilfsleitungen aufrecht erhalten wird. Mit den Kontaktbuchsen des Kontaktblockes 17 wirkt ein Steckelement 18 zusammen, das an seiner der Klemmleiste 5 zugewandten Seite eine Vielzahl von Kontaktstiften 19 besitzt, die zum Eingreifen in die Kontaktglieder 13 der Klemmleiste 5 bestimmt sind. An seiner gegenüberliegenden, d. h. zur Rückseite des Leistungsschalters 1 weisenden Seite besitzt das Steckelement 18 eine Anzahl von Kontaktstiften 20, die mit den Kontaktbuchsen 21 des Kontaktblockes 17 nach Art von Gleitkontakten zusammenwirkt.

Für die beschriebene Anordnung zum Anschluß von Hilfsleitungen an einen Leistungsschalter ist es somit wesentlich, daß allen Ausführungsformen die gleiche Klemmleiste 5 bzw. 40 gemeinsam ist und daß die unterschiedlichen Anschlußarten durch baukastenartig hinzuzufügende Zusatzteile verwirklicht werden.

Da bei der ausziehbaren Anordnung des Leistungsschalters 1 Toleranzen im Zusammenwirken zwischen dem schalterseitigen Steckelement 18 und dem Kontaktblock 17 unvermeidlich sind, ist es vorteilhaft, die Möglichkeit eines selbsttätigen Toleranzausgleichs vorzusehen, damit der Leistungsschalter ohne besondere Rücksichtnahme auf die Hilfsleitungen einschiebbar ist. Ein Beispiel hierfür zeigt die Figur 6. Der Kontaktblock 17 mit seinen Kontaktbuchsen 21 befindet sich hierbei in einem Halter 23, der den Kontaktblock 17 mit Abstand umgreift. In dem Zwischenraum sind Federelemente, beispielsweise in der Form von Blattfedern 24 angeordnet, die den Kontaktblock 17 innerhalb des Halters 23 im Ruhezustand annähernd mittig zentrieren. Aufgrund der Federung der Blattfedern 24 oder gleichartiger Federelemente kann sich jedoch der Kontaktblock 17 auf die Kontaktelemente 21 des Steckelementes 20 (Figur 4) ausrichten, wodurch ein einwandfreies Zusammenwirken gewährleistet ist. Der Halter 23 kann an dem Einschubrahmen 16 festgeschraubt sein (untere Schraube 25) oder mittels einer Schnappverbindung (obere Rastnase 26) befestigt sein.

In ähnlicher Weise kann auch das Steckelement 18 an der Seitenwand des Leistungsschalters 1 befestigt sein. Andererseits kann das Steckelement 18 aber auch so ausgeführt sein, daß es allein von der Klemmleiste 5 bzw. 40 gehalten wird. Hierfür kommen insbesondere Rastelemente in Gestalt federnder Kunststoffnasen oder ähnliche Glieder in Betracht.

In den Figuren 2, 3 und 5 ist noch gezeigt, daß sowohl die Klemmleiste 5 als auch der Vielfachstecker 15 und der Kontaktblock 17 mit einer abgeschrägten Vorderkante 27, 28 bzw. 29 versehen sind, die zur Anbringung einheitlich ausgeführter und beschrifteter Nummernleisten 30, 31 und 32 zu Bezeichnung der Klemmen dienen.

Darüber hinaus sind die Klemmleiste 5, der Vielfachstecker 15 und der Kontaktblock 17 mit Kontaktgliedern für Prüfzwecke versehen, um den richtigen Anschluß der Hilfsleitungen und die ordnungsgemäße Kontaktgabe untersuchen zu können. Diese Kontaktstellen 33 dienen zum Anlegen oder Einführen einer Prüfspitze und sind an der Klemmleiste 5 neben den Kontaktelementen 12 vorgesehen. Entsprechende Kontaktstellen an dem Vielfachstecker 15 gemäß der Figur 3 sind mit 34 und an dem Kontaktblock 17 mit 35 bezeichnet.

Anhand der Figur 7 wird nun ein weiteres Ausführungsbeispiel einer selbsttätigen Anordnung zum Anschluß bzw. zur Trennung von Hilfsleitungen an einem ausfahrbar angeordneten Schaltgerät ermöglicht. An einer Seitenwand 50 eines Leistungsschalters 51 ist eine Klemmleiste 52 befestigt, an deren der Frontseite 53 des Leistungsschalters 51 zugewandten Stirnseite 54 nebeneinander zwei Reihen von Kontaktgliedern für Hilfsleitungen angeordnet sind. Die in der figur links gezeigte Reihe von Kontaktgliedern 55 ist für die schalterseitigen Hilfsleitungen 56 vorgesehen, während die rechte Seite von Kontaktgliedern 57 in dem vorliegenden Beispiel unbesetzt ist und bei festem Einbau des Leistungsschalters 51 beispielsweise mit einzelnen wegführenden Hilfsleitungen belegt werden kann.

In der Figur 7 ist ferner geschnitten eine Seitenwand 60 eines Einschubrahmens gezeigt, in dem der Leistungsschalter 51 verschiebbar geführt ist. An der der Seitenwand 50 des Leistungsschalters 1 zugewandten Innenseite dieser Seitenwand 60 befindet sich als Stützpunkt eine Anschlußvorrichtung oder Befestigungsvorrichtung 61 eines Bündels von biegsamen und beweglichen Hilfsleitungen 62. An seinem gegenüberliegenden Ende ist das Bündel der Hilfsleitungen aufgefächert zum Anschluß an die Kontaktglieder einer Steckeinheit 63, die einen Halter 64 zur Befestigung der Hilfsleitungen aufweist.

Die Steckeinheit 63 ist zur verschiebbaren Führung an einer oberen Führungsschiene 65 und einer entsprechenden unteren Führungsschiene 66 mit Fortsätzen versehen, von denen in der

Figur 7 nur der obere Fortsatz 67 sichtbar ist. Die Klemmleiste 52 und die Steckeinheit 63 wirken miteinander nach der Art einer Vielfachsteckverbindung zusammen. Hierzu ist die Klemmleiste 52 an ihrer der Steckeinheit 63 zugewandten Rückseite mit Kontaktstiften 70 versehen, denen entsprechende Kontaktbuchsen 71 der Steckeinheit 63 gegenüberstehen. In der in figur 7 gezeigten Stellung der Teile liegt die Steckeinheit 63 an Anschlagflächen der Führungsschienen 65 und 66 an, von denen in der Figur 7 der obere Anschlag 72 gezeigt ist. Gegen diese Anschläge wird die Steckeinheit 63 durch zwei Schraubendruckfedern 73 gedrückt, die nahe den Führungsschienen 65 und 66 angeordnet sind und von deren Schenkeln teilweise umschlossen werden. Die genannten Schraubenfedern sind so bemessen, daß eine eventuelle Steifigkeit der Hilfsleitungen 62 sowie die Reibung der Steckeinheit 63 in den Führungsschienen 65 und 66 überwunden wird und die Steckeinheit 63 an den Anschlägen 72 mit solcher Vorspannung anliegt, daß die Kontaktstifte 70 der Klemmleiste 52 mit den Kontaktbuchsen 71 der Steckeinheit 63 ordnungsgemäß in Eingriff gelangen können. Die hierzu erforderliche gegenseitige Ausrichtung kommt dadurch zustande, daß die Klemmleiste 52 gleichfalls in den Führungsschienen 65 und 66 mittels entsprechender Ansätze 74 geführt ist.

Zur Überwindung von Toleranzen beim Einfahren des Leistungsschalters 51 in den Einschubrahmen sind die Führungsschienen 65 und 66 an ihren vorderen Enden 75 und 76 derart erweitert, daß sich eine trichterartig erweiterte Mündung ergibt. Die außerdem erforderliche Möglichkeit der gegenseitigen Ausrichtung kann durch eine schwimmende Befestigung der Klemmleiste 52 an der Seitenwand 50 des Leistungsschalters 51 oder durch eine entsprechende Beweglichkeit der Führungsschienen 65 und 66, etwa durch eine geeignete Gestaltung ihrer Haltewinkel 77 und 78 erreicht werden.

In Figur 7 ist die relative Stellung der Teile gezeigt, die sich ergibt, wenn der Leistungsschalter 51 in den Einschubrahmen (Seitenwand 60) eingesetzt worden ist und die Klemmleiste 52 von den Führungschienen 65 und 66 erfaßt worden ist. Dagegen sind die Kontaktstifte 70 noch nicht in Eingriff mit den Kontaktbuchsen 71 der Steckeinheit 63 gelangt. Bei der weiteren Bewegung des Leistungsschalters 51 in Richtung des Pfeiles 80 wird nun die Teststellung erreicht, in der durch Eingreifen der Kontaktstifte 70 in die Kontaktbuchsen 71 alle schalterseitigen Hilfsleitungen 56 mit dem wegführenden Bündel von Hilfsleitungen 62 verbunden ist. Die Stellung der Steckeinheit 63 gegenüber den Führungsschienen 65 und 66 kann hierbei im Vergleich zu der Figur 7 praktisch unverändert sein, weil die Schraubenfedern 73 die benötigte Vorspannkraft bereitstellen. Erst beim Überführen des Leistungsschalters 51 in die Betriebsstellung, d. h. bei weiterer Bewegung in Richtung des Pfeiles 80 verschieben sich die Klemmleiste 52 und die Steckeinheit 63 gemeinsam. Sinngemäß die gleichen Vorgänge spielen sich beim Herausziehen des Leistungsschalters 51 aus der Betriebsstellung ab. Hierbei bleiben die Klemmleiste 52 und die Steckeinheit 63 solange im Eingriff, bis die Steckeinheit 63 gegen die Anschläge 72 stößt. Wird der Leistungsschalter 51 noch weiter entgegen dem Pfeil 80 bewegt, so trennen sich die Kontaktstifte 70 von den zugehörigen Kontaktbuchsen 71.

Bei der Beschreibung der Ausführungsbeispiele wurde davon ausgegangen, daß es sich jeweils um die Hilfsleitungen eines Leistungsschalters handelt. Es ist jedoch ohne weiteres ersichtlich, daß die Herkunft der Hilfsleitungen für das Wesen der beschriebenen Anschlußsysteme unerheblich ist und demzufolge alle Ausführungsbeispiele ohne jede Änderung auch für beliebige andere Schaltgeräte oder Schaltgerätekombinationen anwendbar sind. An die Stelle des jeweils erwähnten Leistungsschalters kann somit auch ein Niederspannungsschütz oder Mittelspannungsschütz treten. Ebenso ist die Erfindung anwendbar bei Schaltgerätekombinationen, wie sie für den Betrieb von Elektromotoren bzw. motorischen Antrieben eingesetzt werden und die neben einem oder mehreren Schützen weitere Geräte wie Schmelzsicherungen, Auslöser, Befehlsgeräte und ähnliche Teile enthalten können.

Da die Anzahl der benötigten Hilfsleitungen je Schaltgerät bzw. Schaltgerätekombination sehr unterschiedlich sein kann, empfiehlt es sich, die beschriebenen Klemmleisten und die jeweils mit ihr zusammenwirkenden weiteren Elemente entsprechend einer häufig benötigten Anzahl von Hilfsleitungen zu bemessen, beispielsweise also 8-polig oder 12-polig. Für eine größere Anzahl von Hilfsleitungen kann man dann ein entsprechendes Mehrfaches der einheitlich ausgeführten Klemmleisten und zugehörigen Elemente benutzen.

In den Figuren sind die Klemmleisten und die hiermit zusammenwirkenden Teile sowie die darin enthaltenen Kontaktglieder vereinfacht dargestellt, weil für die Erfindung die Anordnung und gegenseitige Zuordnung der Teile wesentlicher als ihre Beschaffenheit ist. Im Rahmen der Erfindung können daher alle geeigneten Prinzipien von Kontaktgliedern sowie alle geeigneten leitenden und isolierenden Werkstoffe sowie Formgebungsverfahren zur Herstellung der Klemmleisten und der übrigen beschriebenen Teile eingesetzt werden. Dieses gilt sinngemäß für die Befestigung der Teile an den Schaltgeräten und an ortsfesten Teilen von Gerüsten oder Schaltanlagen.

## Patentansprüche

1. Anordnung zum Anschluß von Hilfsleitungen (11, 14; 56, 62) an ein Schaltgerät bzw. eine Schaltgerätekombination (1) mit einer an dem Schaltgerät bzw - kombination (1; 51) angebrachten Klemmleiste (5; 40; 52), die eine Gruppe von Kontaktgliedern (10; 55) für mit dem Schaltgerät bzw -kombination (1) verbundene Hilfsleitungen (11; 56) und eine Gruppe mit gleicher Anzahl von Kontaktgliedern (12) für von dem Schaltgerät bzw - kombination (1; 51) wegführende Hilfsleitungen (14; 62) einer Schaltanlage besitzt, sowie mit einem das Schaltgerät bzw - kombination (1; 51) aufnehmenden Träger (7, 16), gekennzeichnet durch folgende Merkmale:

a) Die Klemmleiste (5; 40; 52) besitzt für jede mit dem Schaltgerät (1; 51) verbundene Hilfsleitung (11; 62) mindestens zwei weitere Kontaktglieder (12, 13; 42, 43; 57; 70) für von dem Schaltgerät (1; 51) wegführende Hiltsleitungen;

b) mindestens eine Gruppe von Kontaktgliedern (12; 33; 43; 57) für wegführende Hilfsleitungen (14) ist an der Klemmleiste (5; 40; 52) so angeordnet, daß die Kontaktglieder von der Frontseite des Schaltgerätes (1; 51) her zugänglich sind, während mindestens eine Gruppe von Kontaktgliedern (13; 44; 70) an der Rückseite der Klemmleiste (5; 40; 52) angeordnet ist;

c) die Kontaktglieder der einen an der Frontseite der Klemmleiste befindlichen Gruppe (10) sind als Anschlußvorrichtungen für Einzelleiter und die Kontaktglieder einer weiteren Gruppe (12; 43) sind als Aufnahmevorrichtungen für Stifte eines Vielfachsteckers (15) ausgebildet;

d) die Kontaktglieder (13, 44, 70) einer an der Rückseite der Klemmleiste (5; 40; 52) befindlichen Gruppe von Kontaktgliedern sind zum Eingreifen eines an der Klemmleiste (5; 40; 52) und/oder an dem Schaltgerät (1; 51) dauerhaft oder lösbar anzubringenden Steckelementes (18; 63) ausgebildet, wobei das Steckelement (20; 63) bei ausfahrbarer Anordnung des Schaltgerätes (1; 51) im Zuge einer wegführenden Hilfsleitung (14; 62) als Zwischenglied bezüglich eines ortsfesten Stützpunktes (Kontaktblock 17; Befestigungsvorrichtung 61) dient.

2. Anordnung nach Anspruch 1, dadurch gekennzeichnet, daß der Stützpunkt als Kontaktblock (17) ausgebildet ist, der jeweils ein Kontaktglied für den festen Anschluß einer wegführenden Hilfsleitung (14) und ein mit diesem galvanisch verbundenes weiteres Kontaktglied (22) aufweist, das zusammen mit einem an dem Steckelement (18) angebrachten korrespondierenden Kontaktglied (21) entlang dem zwischen der Betriebsstellung und der Teststellung des Schaltgerätes (1) zurücklegenden Weg nach Art einer Gleitkontaktbahn zusammenwirkt.

3. Anordnung nach Anspruch 2, dadurch gekennzeichnet, daß der Kontaktblock (17) und/oder seine Kontaktglieder (21) sowie das Steckelement (18) und/oder seine Kontaktglieder (21) für den Ausgleich von Lagetoleranzen bemessen bzw. mit einer Vorrichtung zum Ausgleich solcher Toleranzen versehen sind.

4. Anordnung nach Anspruch 2, dadurch gekennzeichnet, daß das Steckelement (63) an ortsfesten Führungsteilen (65, 66) in Richtung der Trennstellung des Schaltgerätes (51) bis zu einem Anschlag (72) gegen die Kraft einer Feder (73) bewegbar geführt ist und Kontaktglieder für den Anschluß biegsamer und beweglicher Hilfsleitungen (62) besitzt, die an dem ortsfesten Stützpunkt (Befestigungsvorrichtung 61) gehalten sind.

5. Anordnung nach Anspruch 1, 2 oder 4, gekennzeichnet durch die Anpassung des Steckelementes (18; 63) an die Klemmleiste (18; 40; 52) hinsichtlich der Polzahl und der Abmessungen des Profils.

6. Anordnung nach Anspruch 1 oder 2, dadurch gekennzeichnet, daß die Klemmleiste (5; 40), ein in diese einführbarer Stecker (15) und der Kontaktblock (17) oder einzelne dieser Teile zusätzliche Kontaktglieder (33, 34, 35) für Prüfzwecke besitzen.

## Claims

1. Arrangement for the connection of auxiliary conductors (11, 14; 56, 62) to a switchgear or a switchgear combination (1), having a terminal strip (5; 40; 52) attached to the switchgear or switchgear combination (1; 51) which has a group of contact elements (10; 55) for auxiliary conductors (11; 56) connected to the switchgear or switchgear combination (1), and a group with an equal number of contact elements (12) for outgoing auxiliary conductors (14; 62) of a switch installation from the switchgear or switchgear combination (1; 51), and having a carrier (7; 16) receiving the switchgear or switchgear combination (1; 51), characterised by the following features:

a) the terminal strip (5; 40; 52) has, for each auxiliary conductor (11; 62) connected to the switchgear (1; 51), at least two further contact elements (12, 13; 42, 43; 57; 70) for outgoing auxiliary conductors from the switchgear (1; 51):

b) at least one group of contact elements (12; 33; 43; 57) for outgoing auxiliary conductors (14) is so arranged on the terminal strip (5; 40; 52) that the contact elements are accessible from the front side of the switchgear (1; 51), whilst at least one group of contact elements (13; 44; 70) is arranged on the rear side of the terminal strip (5; 40; 52);

c) the contact elements of one group (10) located on the front side of the terminal strip are constructed as terminal devices for individual conductors, and the contact elements of a further group (12, 43) are constructed as receiving devices for pins of a multipoint connector (15);

d) the contact elements (13; 44; 70) of a group of contact elements located on the rear side of the terminal strip (5; 40; 52) are constructed for engaging a plug element (18; 63) to be connected permanently or removably on the terminal strip (5; 40; 52) and/or on the switchgear (1; 51), wherein in the case of a removable arrangement of the switchgear (1; 51), the plug element (20; 63) is used with an outgoing auxiliary conductor (14; 62) as an intermediate member with respect to a fixed support point (contact block 17, securing device 61).

2. Arrangement according to claim 1, characterised in that the support point is constructed as a contact block (17) which respectively has a contact element for the fixed connection of an outgoing auxiliary conductor (14), and a further contact element (22) electrically connected to this, which co-operates with a corresponding contact element (21) fitted on the plug element (18) along the path to be covered between the operating position and the test position of the sswitchgear (1), like a kind of sliding contact path.

3. Arrangement according to claim 2, characterised in that the contact block (17) and/or its contact elements (21) and the plug element (18) and/or its contact elements (21) are dimensioned for the compensation of positional tolerances or are provided with a device for the compensation of such tolerances.

4. Arrangement according to claim 2, characterised in that the plug element (63) is movably guided against the force of a spring (73) on fixed guided parts (65, 66) in the direction of the separation position of the switchgear (51) up to a stop (72), and has contact elements for the connection of flexible and movable auxiliary conductors (62) which are held on the fixed support point (securing device 61).

5. Arrangement according to claim 1, 2 or 4, characterised by the adaptation of the plug element (18; 63) to the terminal strip (18; 40; 52) with regard to the pole number and the dimensions of the profile.

6. Arrangement according to claim 1 or 2, characterised in that the terminal strip (5; 40), a plug (15) that can be inserted into this, and the contact block (17) or individual ones of these parts, have additional contact elements (33, 34, 35) for test purposes.

## Revendications

1. Dispositif pour la connexion de conducteurs auxiliaires (11, 14; 56, 62) à un appareillage électrique ou une combinaison d'appareillages électriques (1), comprenant une réglette à bornes (5, 40, 52), disposée sur l'appareillage électrique ou la combinaison d'appareillages électriques (1, 51), qui possède un groupe d'éléments de contact (10, 55) pour des conducteurs auxiliaires (11, 56) reliés à l'appareillage électrique ou à la combinaison d'appareillages électriques (1) et un groupe comprenant le même nombre d'éléments de contact (12) pour des conducteurs auxiliaires (14, 62), partant de l'appareillage électrique ou de la combinaison d'appareillages électriques (1, 51) et faisant partie d'une installation de distribution, ainsi qu'un support (7, 16) recevant l'appareillage électrique ou la combinaison d'appareillages électriques (1, 51), qui est caractérisé en ce que:

a) la réglette à bornes (5, 40, 52) possède, pour chaque conducteur auxiliaire (11, 62) relié à l'appareillage électrique (1, 51), au moins deux autres éléments de contact (12, 13; 42, 43; 57, 70) pour des conducteurs auxiliaires partant de l'appareillage électrique (1, 51);

b) au moins un groupe d'éléments de contact (12, 33, 43, 57) pour conducteurs auxiliaires (14) partants est disposé sur la réglette à bornes (5, 40, 52) de manière que les éléments de contact soient accessibles depuis le côté avant de l'appareillage électrique (1, 51), tandis qu'au moins un groupe d'éléments de contact (13, 44, 70) est disposé sur le côté arrière de la réglette à bornes (5, 40, 52);

c) les éléments de contact d'un groupe (10) se trouvant sur le côté avant de la réglette à bornes sont réalisés comme des dispositifs de connexion pour conducteurs individuels et les éléments de contact d'un autre groupe (12, 43) sont réalisés comme des dispositifs pour la réception de broches d'une fiche de connecteur multiple (15);

d) les éléments de contact (13, 44, 70) d'un groupe d'éléments de contact se trouvant sur le côté arrière de la réglette à bornes (5, 40, 52) sont réalisés pour s'assembler avec un élément enfichable (18, 63) à disposer fixe ou amovible sur la réglette à bornes (5, 40, 52) et/ou sur l'appareillage électrique (1, 51), l'élément enfichable (20, 63) servant, en cas de disposition extractible de l'appareillage électrique (1, 51), en tant qu'élément intermédiaire, sur le trajet d'un conducteur auxiliaire (14, 62) partant, par rapport à un point d'appui fixe (bloc de contact 17; dispositif de fixation 61).

2. Dispositif selon la revendication 1, caractérisé en ce que le point d'appui est réalisé comme un bloc de contact (17) qui présente chaque fois un élément de contact pour le raccordement fixe d'un conducteur auxiliaire (14) partant et un autre élément de contact (22), relié galvaniquement au premier, qui coopère à la façon d'une voie de contact glissant avec un élément de contact (21) correspondant, disposé sur l'élément enfichable (18), le long du trajet à couvrir par l'appareillage électrique (1) entre la position de service et la position d'essai.

3. Dispositif selon la revendication 2, caractérisé en ce que le bloc de contact (17) et/ou ses éléments de contact (21), de même que l'élément enfichable (16) et/ou ses éléments de contact (21), sont dimensionnés en vue de la compensation de tolérances de position ou sont pourvus d'un dispositif pour la compensation de telles tolérances.

4. Dispositif selon la revendication 2,

**0 133 152**

caractérisé en ce que l'élément enfichable (63) est déplaçable, contre la force d'un ressort (73) et en étant guidé sur des pièces de guidage fixes (65, 66), en direction de la position de sectionnement de l'appareillage électrique (51), jusqu'à une butée (72), et que l'élément enfichable possède des éléments de contact pour la connexion de conducteurs auxiliaires (62) flexibles et déplaçables qui sont maintenus au point d'appui fixe (dispositif de fixation 61).

5. Dispositif selon la revendication 1, 2 ou 4, caractérisé par l'adaptation de l'élément enfichable (16, 63) à la réglette à bornes (16, 40, 52) en ce qui concerne le nombre de pôles et les dimensions du profil.

6. Dispositif selon la revendication 1 ou 2, caractérisé en ce que, à des fins de contrôle, la réglette à bornes (5, 40) possède une fiche (15) pouvant être enfoncée dans la réglette et le bloc de contact (17), ou certaines de ces pièces, possèdent des éléments de contact supplémentaires (33, 34, 35).

FIG 1

FIG 2

FIG 3

FIG 4

FIG 5

FIG 6

FIG 7